# EUROPEAN PATENT APPLICATION

(11) **EP 3 001 291 A1**
(43) Date of publication of application: **30.03.2016**
(21) Application number: 14861078.5
(22) Date of filing: 17.10.2014
(51) Int. Cl.: G06F 3/041

(54) **TOUCH CONTROL RESPONDING METHOD AND DEVICE**

(30) Priority: 07.11.2013 CN 201310552609
(71) Applicant: Huawei Device Co., Ltd., Shenzhen, Guangdong 518129 (CN)
(72) Inventor: SONG, Gang, Shenzhen Guangdong 518129 (CN)
(74) Representative: Thun, Clemens
(86) International application number: PCT/CN2014/088781
(87) International publication number: WO 2015/067121

(57) **Abstract**

Embodiments of the present invention disclose a touch control responding method and apparatus, where in the touch control responding method, after a first touch control interrupt instruction is received, first responding to the first touch control interrupt instruction is delayed, and whether a second touch control interrupt instruction is generated is determined within a preset delay time; if the second touch control interrupt instruction is generated, it indicates that a touch control operation is performed by a user in a middle area between a touch control button and a touch screen, and in this case, a first control instruction responding only to the first touch control interrupt instruction or the second touch control interrupt instruction is generated. In this way, when the touch control operation is performed by the user in the middle area between the touch control button and the touch screen, a control instruction responding to a touch control interrupt instruction is fixed, which resolves problems existing in the prior art: a touch control operation is randomly performed easily because of imbalance of a finger and further a misoperation is caused, and a conflict is caused because a touch screen operation and a touch button operation are concurrently performed.

## Description

This application claims priority to Chinese Patent Application No. 201310552609.5, filed with the Chinese Patent Office on November 7, 2013, and entitled "TOUCH CONTROL RESPONDING METHOD AND APPARATUS", which is incorporated herein by reference in its entirety.

### TECHNICAL FIELD

The present invention relates to the field of data processing technologies, and in particular, to a touch control responding method and apparatus.

### BACKGROUND

For an existing touch control terminal device, such as a mobile phone and a tablet computer, a touch control button is generally located below a touch screen, and a user may perform a related operation by touching the touch control button or the touch screen.

When a touch control operation is performed by the user, the touch control terminal device detects the touch control operation of the user, and correspondingly generates a touch control interrupt instruction according to a type of the touch control operation, that is, a touch screen interrupt instruction is generated by touching the touch screen, and a touch button interrupt instruction is generated by touching the touch control button; and then the touch control terminal device responds to the touch control interrupt instruction, and performs responding according to a sequence in which the touch control interrupt instruction is generated.

However, because the existing touch control terminal device is formed by applying a compact design, and the touch control button is relatively close to the touch screen, when a touch control operation is performed by the user in a middle area between the touch control button and the touch screen, a touch control operation is randomly performed easily because of imbalance of a finger, that is, a touch screen operation or a touch button operation may be performed, which may lead to a randomly generated touch control interrupt instruction, easily resulting in a misoperation; and even when the touch control operation is performed by the user in the middle area between the touch control button and the touch screen, the touch screen operation and the touch button operation may be concurrently performed, leading to a conflict.

### SUMMARY

In view of this, embodiments of the present invention provide a touch control responding method and apparatus, so as to resolve problems: when a touch control operation is performed, on an existing touch control terminal, in a middle area between a touch control button and a touch screen, a touch control operation is randomly performed easily because of imbalance of a finger and further a misoperation is caused, and a conflict is caused because a touch screen operation and a touch button operation are concurrently performed.

To achieve the foregoing objectives, provided solutions are as follows:
According to a first aspect of the embodiments of the present invention, a touch control responding method is provided, including:
   after a first touch control interrupt instruction is received, delaying responding to the first touch control interrupt instruction;
   determining whether a second touch control interrupt instruction is generated within a preset delay time; and
   if the second touch control interrupt instruction is generated within the preset delay time, generating a first control instruction, where the first control instruction is used to respond to the first touch control interrupt instruction or the second touch control interrupt instruction, where
   the first touch control interrupt instruction and the second touch control interrupt instruction both include a touch screen interrupt instruction and a touch control button interrupt instruction, and the first touch control interrupt instruction is different from the second touch control interrupt instruction.

In a first implementation manner of the first aspect of the embodiments of the present invention, the touch control responding method further includes:
if it is determined that the second touch control interrupt instruction is not generated within the preset delay time, generating a second control instruction, where the second control instruction is used to respond to the first touch control interrupt instruction.

In the first implementation manner or a second implementation manner of the first aspect of the embodiments of the present invention, the generating a first control instruction includes:
generating a third control instruction according to a type of the first touch control interrupt instruction, where the third control instruction is used to respond to the first touch control interrupt instruction or the second touch control interrupt instruction; and
generating a fourth control instruction according to a type of the second touch control interrupt instruction, where the fourth control instruction is used to respond to the first touch control interrupt instruction or the second touch control interrupt instruction, where
the type of the first touch control interrupt instruction and the type of the second touch control interrupt instruction separately include the touch screen interrupt instruction and the touch control button interrupt instruction.

In a third implementation manner of the first aspect of the embodiments of the present invention, the generating the third control instruction according to a type of the first touch control interrupt instruction includes:
if it is determined that the first touch control interrupt instruction is the touch screen interrupt instruction, generating a first touch control instruction used to respond to the first touch control interrupt instruction; and
if it is determined that the first touch control interrupt instruction is not the touch screen interrupt instruction, generating a second touch control instruction used to respond to the second touch control interrupt instruction.

In the third implementation manner of the first aspect of the embodiments of the present invention, the generating the fourth control instruction according to a type of the second touch control interrupt instruction includes:
if it is determined that the second touch control interrupt instruction is the touch screen interrupt instruction, generating a third touch control instruction used to respond to the second touch control interrupt instruction; and
if it is determined that the second touch control interrupt instruction is not the touch screen interrupt instruction, generating a fourth touch control instruction used to respond to the first touch control interrupt instruction.

According to a second aspect of the embodiments of the present invention, a touch control responding apparatus is provided, including:
a delay signal generating unit, configured to: after receiving a first touch control interrupt instruction, delay responding to the first touch control interrupt instruction;
a determining unit, configured to determine whether a second touch control interrupt instruction is generated within a preset delay time; and
a first generating unit, configured to generate a first control instruction if the determining unit determines that the second touch control interrupt instruction is generated within the preset delay time, where the first control instruction is used to respond to the first touch control interrupt instruction or the second touch control interrupt instruction, where the first touch control interrupt instruction and the second touch control interrupt instruction both include a touch screen interrupt instruction and a touch control button interrupt instruction, and the first touch control interrupt instruction is different from the second touch control interrupt instruction.

In a first implementation manner of the second aspect of the embodiments of the present invention, the touch control responding apparatus further includes:
a second generating unit, configured to generate a second control instruction if the determining unit determines that the second touch control interrupt instruction is not generated within the preset delay time, where the second control instruction is used to respond to the first touch control interrupt instruction.

In the first implementation manner or a second implementation manner of the second aspect of the embodiments of the present invention, the first generating unit includes:
a first signal generating unit, configured to generate a third control instruction according to a type of the first touch control interrupt instruction, where the third control instruction is used to respond to the first touch control interrupt instruction or the second touch control interrupt instruction; and
a second signal generating unit, configured to generate a fourth control instruction according to a type of the second touch control interrupt instruction, where the fourth control instruction is used to respond to the first touch control interrupt instruction or the second touch control interrupt instruction, where
the type of the first touch control interrupt instruction and the type of the second touch control interrupt instruction separately include the touch screen interrupt instruction and the touch control button interrupt instruction.

In a third implementation manner of the second aspect of the embodiments of the present invention, the first signal generating unit includes:
a first control signal generating unit, configured to: if it is determined that the first touch control interrupt instruction is the touch screen interrupt instruction, generate a first touch control instruction that responds to the first touch control interrupt instruction; and if it is determined that the first touch control interrupt instruction is not the touch screen interrupt instruction, generate a second touch control instruction that responds to the second touch control interrupt instruction.

In the third implementation manner of the second aspect of the embodiments of the present invention, the second signal generating unit includes:
a second control signal generating unit, configured to: if it is determined that the second touch control interrupt instruction is the touch screen interrupt instruction, generate a third touch control instruction that responds to the second touch control interrupt instruction; and if it is determined that the second touch control interrupt instruction is not the touch screen interrupt instruction, generate a fourth touch control instruction that responds to the first touch control interrupt instruction.

It can be seen from the foregoing technical solutions that, in a touch control responding method disclosed in the embodiments of the present invention, after a first touch control interrupt instruction is received, first responding to the first touch control interrupt instruction is delayed, and whether a second touch control interrupt instruction is generated is determined within a preset delay time; if the second touch control interrupt instruction is generated, it indicates that a touch control operation is performed by a user in a middle area between a touch control button and a touch screen, and in this case, a first control instruction responding only to the first touch control interrupt instruction or the second touch control interrupt instruction is generated. In this way, when the touch control operation is performed by the user in the middle area between the touch control button and the touch screen, a control instruction responding to a touch control interrupt instruction is fixed, which resolves problems in the prior art: a touch control operation is randomly performed easily because of imbalance of a finger and further a misoperation is caused, and a conflict is caused because a touch screen operation and a touch button operation are concurrently performed.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a touch control responding method disclosed in an embodiment of the present invention;
FIG. 2 is a flowchart of a touch control responding method disclosed in another embodiment of the present invention;
FIG. 3 is a flowchart of a touch control responding method disclosed in another embodiment of the present invention;
FIG. 4 is a flowchart of a touch control responding method disclosed in another embodiment of the present invention;
FIG. 5 is a flowchart of a touch control responding method disclosed in another embodiment of the present invention;
FIG. 6 is a flowchart of a touch control responding method disclosed in another embodiment of the present invention;
FIG. 7 is a schematic structural diagram of a touch control responding apparatus disclosed in an embodiment of the present invention;
FIG. 8 is a schematic structural diagram of a touch control responding apparatus disclosed in another embodiment of the present invention;
FIG. 9 (a) is a schematic structural diagram of a touch control terminal device disclosed in an embodiment of the present invention; and
FIG. 9 (b) is another schematic structural diagram of a touch control terminal device disclosed in an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The terms used in the embodiments of the present invention are merely for a purpose of describing a specific embodiment, and are not intended to limit the present invention. The terms "a", "said" and "the" of singular forms used in the embodiments and the appended claims of the present invention are also intended to include plural forms, unless otherwise specified in a context clearly.

It should be understood that, although terms such as "first" "second" and "third" may be used to describe various control instructions in the embodiment of the present invention, the control instructions are not limited to these terms. These terms are merely used to differentiate the control instructions. For example, without departing from the scope of the embodiment of the present invention, a first control instruction may also be referred to as a second control instruction, and similarly, the second control instruction may also be referred to as the first control instruction.

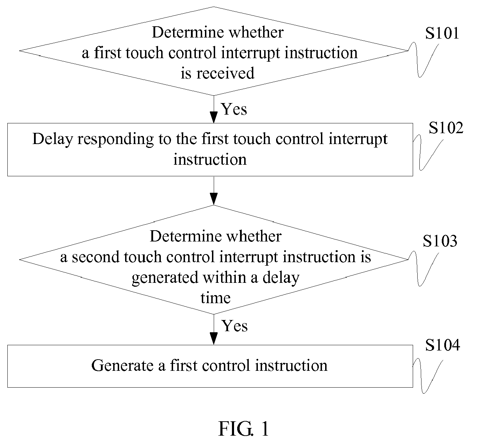

Referring to FIG. 1, a touch control responding method disclosed in an embodiment of the present invention includes the following steps:
S101: Determine whether a first touch control interrupt instruction is received.

Specifically, a touch control terminal device detects whether a user performs a touch control operation in a touch control area, and if the touch control operation is performed, a touch control interrupt instruction may be formed, where the touch control area includes a touch screen area and a touch control button area.

In addition, a different area in which the user performs a corresponding touch control operation leads to a different formed touch control interrupt instruction correspondingly, that is, the user performs a touch control operation on a touch screen to form a touch screen interrupt instruction; and the user performs a touch control operation on a touch control button to form a touch control button interrupt instruction.

If it is determined that the first touch control interrupt instruction is not received, the method exits without performing a subsequent procedure.

If it is determined that the first touch control interrupt instruction is received, S102 is performed to delay responding to the first touch control interrupt instruction.

Specifically, after determining that the first touch control interrupt instruction is generated, the touch control terminal device does not immediately respond to the first touch control interrupt instruction, generates a control signal for delaying responding, and determines whether another touch control operation is also concurrently performed by the user within a delay time.

The delay time may be set according to a practical situation, a long set time indicates that it takes a long time to wait for a response, and a short set time indicates that it takes a short time to wait for a response, and a time may be changed to but is not limited to 100 ms.

S103: Determine whether a second touch control interrupt instruction is generated within a preset delay time.

By determining whether the second touch control interrupt instruction is further generated in addition to generation of the first touch control interrupt instruction within the preset delay time, whether the touch control operation is performed by the user in a middle area between a touch control button and a touch screen of the touch control terminal device may be learned.

If the second touch control interrupt instruction is generated, S104 is performed to generate a first control instruction, where the first control instruction is used to respond to the first touch control interrupt instruction or the second touch control interrupt instruction.

Specifically, if it is determined that the second touch control interrupt instruction is generated within the delay time, it indicates that the touch control operation is performed by the user in the middle area between the touch control button and the touch screen, and in this case, the first control instruction is generated, where the first control instruction is limited to responding only to the first touch control interrupt instruction or the second touch control interrupt instruction. In this way, when the touch control operation is performed by the user in the middle area between the touch control button and the touch screen, the first control instruction responding to the touch control interrupt instruction is fixed, which resolves problems in the prior art: a touch control operation is randomly performed easily because of imbalance of a finger and further a misoperation is caused, and a conflict is caused because a touch screen operation and a touch button operation are concurrently performed.

In addition, in this embodiment, the first touch control interrupt instruction includes a touch screen interrupt instruction and a touch control button interrupt instruction, and the second touch control interrupt instruction also includes a touch screen interrupt instruction and a touch control button interrupt instruction, and the first touch control interrupt instruction is different from the second touch control interrupt instruction.

If the first touch control interrupt instruction is a touch control button interrupt instruction, whether the second touch control interrupt instruction is generated within the delay time is determined in step S103 is whether a touch screen interrupt instruction is generated within the delay time is determined. The following provides description by using an example in which the first touch control interrupt instruction is a touch control button interrupt instruction and the second touch control interrupt instruction is a touch screen interrupt instruction.

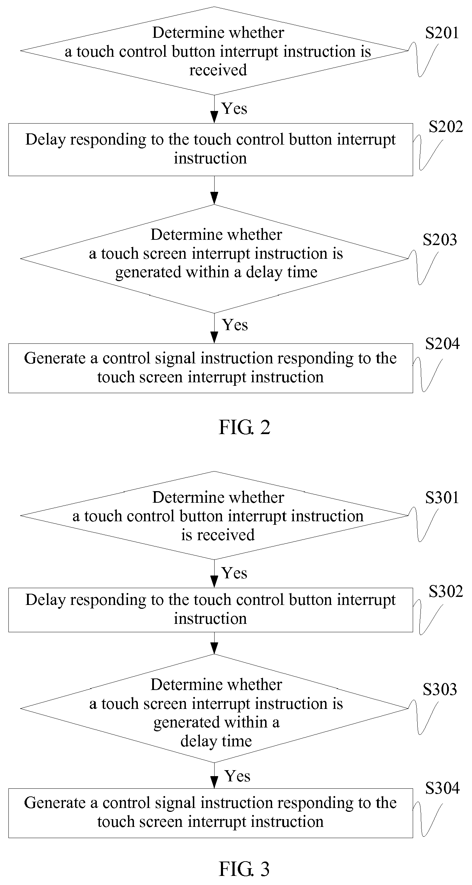

Referring to FIG. 2, a touch control responding method disclosed in an embodiment of the present invention includes the following steps:
S201: Determine whether a touch control button interrupt instruction is received.

Specifically, when a touch control operation is performed by a user in a touch control button area, a touch control terminal device may generate the touch control button interrupt instruction used to indicate that the touch control operation is performed by the user in the touch control button area.

If it is determined that the touch control button interrupt instruction is generated, S202 is performed to delay responding to the touch control button interrupt instruction.

Specifically, after generating the touch control button interrupt instruction, the touch control terminal device first generates a control signal for delaying responding instead of immediately responding to the touch control button interrupt instruction, and in this way, the touch control terminal device does not respond to the touch control operation for input.

S203: Determine whether a touch screen interrupt instruction is generated within a preset delay time.

If the touch screen interrupt instruction is generated, S204 is performed to generate a control signal instruction that responds to the touch screen interrupt instruction.

Specifically, if a touch control operation is performed by the user in a middle area between a touch control button and a touch screen, it is determined that the touch screen interrupt instruction is generated within the preset delay time, and in this case, a control signal responding to the touch screen interrupt instruction is generated and a touch control operation on the touch screen is preferentially processed, which can improve efficiency of a touch control operation of the user.

Certainly, a generated control signal responding to an interrupt instruction may be others, for details, refer to a touch control responding method disclosed in another embodiment of the present invention. Referring to FIG. 3, the method includes the following steps:
S301: Determine whether a touch control button interrupt instruction is received.

If the touch control button interrupt instruction is received, S302 is performed to delay responding to the touch control button interrupt instruction.

S303: Determine whether a touch screen interrupt instruction is generated within a preset delay time.

If it is determined that the touch screen interrupt instruction is generated within the preset delay time, S304 is performed to generate a control instruction that responds to the touch control button interrupt instruction.

In this embodiment, when it is determined that a touch control button interrupt instruction and a touch screen interrupt instruction are generated, a control instruction responding to the touch control button interrupt instruction is generated, which may indicate that when a touch control operation is performed by a user in a middle area between a touch control button and a touch screen, touching and controlling the middle area may bring an effective touch control operation on the touch screen, and improve touch control accuracy of the user.

The foregoing two embodiments both disclose a solution in which the first touch control interrupt instruction is a touch control button interrupt instruction and the second touch control interrupt instruction is a touch screen interrupt instruction, and when a difference between a solution in which the first touch control interrupt instruction is a touch screen interrupt instruction and the second touch control interrupt instruction is a touch control button interrupt instruction and the solution in the foregoing two embodiments lies only in exchanging positions of the touch control button interrupt instruction and the touch screen interrupt instruction, for others, reference may be made to the foregoing two embodiments.

It should be noted herein that in the solution in which the first touch control interrupt instruction is a touch screen interrupt instruction and the second touch control interrupt instruction is a touch control button interrupt instruction, the delay time is set to be short, and only needs to satisfy that the delay time is not less than a time it takes to generate two touch control interrupt instructions when a touch control operation is performed by the user in the middle area between the touch control button and the touch screen. In this way, a problem of a relatively long response delay caused when a touch control operation is performed by the user only on the touch screen.

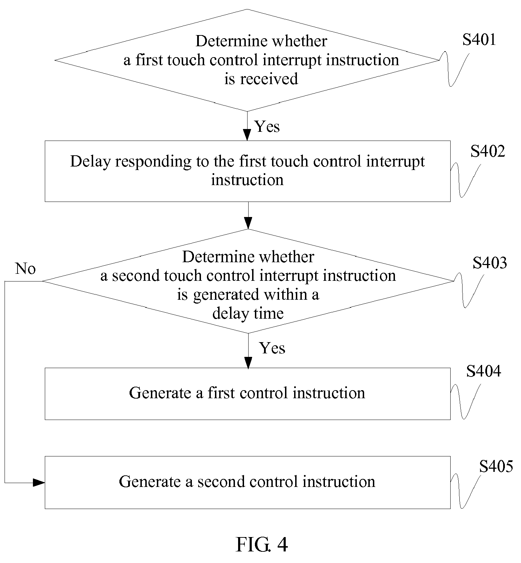

Another embodiment of the present invention further discloses a touch control responding method. Referring to FIG. 4, the method includes the following steps:
S401: Determine whether a first touch control interrupt instruction is received.

If it is determined that the first touch control interrupt instruction is received, S402 is performed to delay responding to the first touch control interrupt instruction.

S403: Determine whether a second touch control interrupt instruction is generated within a preset delay time.

If it is determined that the second touch control interrupt instruction is generated within the preset delay time, S404 is performed to generate a first control instruction, where the first control instruction is used to respond to the first touch control interrupt instruction or the second touch control interrupt instruction.

If it is determined that the second touch control interrupt instruction is not generated within the preset delay time, S405 is performed to generate a second control instruction, where the second control instruction is used to respond to the first touch control interrupt instruction.

In this embodiment, the first touch control interrupt instruction and the second touch control interrupt instruction both include a touch screen interrupt instruction and a touch control button interrupt instruction, and the first touch control interrupt instruction is different from the second touch control interrupt instruction.

In addition, when it is determined that the first touch control interrupt instruction is generated while the second touch control interrupt instruction is not generated, it indicates that a user performs a normal touch control operation, and it is only required to generate a control signal responding to the first touch control interrupt instruction.

Optionally, in the foregoing embodiment disclosed in the present invention, the generating a first control instruction includes:
generating a third control instruction according to a type of the first touch control interrupt instruction, where the third control instruction is used to respond to the first touch control interrupt instruction or the second touch control interrupt instruction; and
generating a fourth control instruction according to a type of the second touch control interrupt instruction, where the fourth control instruction is used to respond to the first touch control interrupt instruction or the second touch control interrupt instruction.

The type of the first touch control interrupt instruction and the type of the second touch control interrupt instruction that are described in this embodiment indicate kinds of the first touch control interrupt instruction and the second touch control interrupt instruction, which may describe that: which types of touch control interrupt instructions the first touch control interrupt instruction and the second touch control interrupt instruction respectively belong to.

In addition, the type of the first touch control interrupt instruction and the type of the second touch control interrupt instruction separately include the touch screen interrupt instruction and the touch control button interrupt instruction.

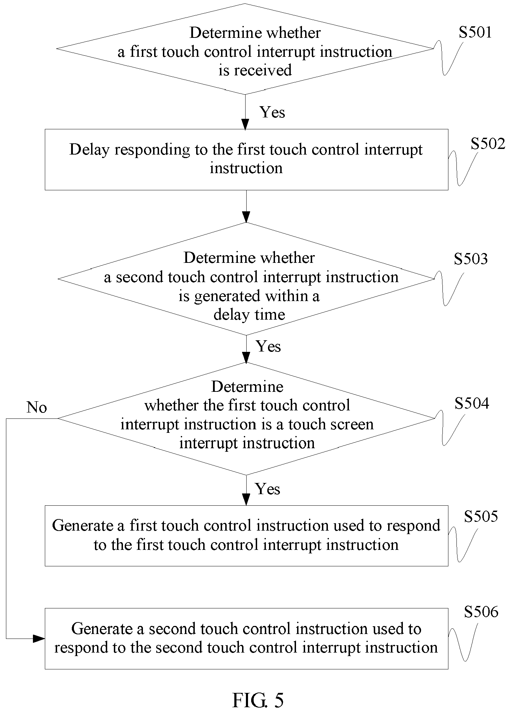

Specifically, referring to FIG. 5, a touch control responding method disclosed in another embodiment of the present invention includes the following steps:
S501: Determine whether a first touch control interrupt instruction is received.

If the first touch control interrupt instruction is received, S502 is performed to delay responding to the first touch control interrupt instruction.

S503: Determine whether a second touch control interrupt instruction is generated within a preset delay time.

If it is determined that the second touch control interrupt instruction is generated within the preset delay time, S504 is performed to determine whether the first touch control interrupt instruction is a touch screen interrupt instruction, if yes, S505 is performed to generate a first touch control instruction used to respond to the first touch control interrupt instruction; and if not, S506 is performed to generate a second touch control instruction used to respond to the second touch control interrupt instruction.

Specifically, in this embodiment, the first touch control interrupt instruction and the second touch control interrupt instruction both include a touch screen interrupt instruction and a touch control button interrupt instruction, and the first touch control interrupt instruction is different from the second touch control interrupt instruction.

It should be noted herein that the first touch control interrupt instruction includes identification information of a touch control type, and it may be learned that the first touch control interrupt instruction is a touch control button interrupt instruction or a touch screen interrupt instruction by identifying the identification information of the touch control type, that is, it may be learned that whether an area in which a user performs a touch control operation is a touch screen area or a touch control button area.

In addition, the operation of identifying the identification information of the touch control type in the first touch control interrupt instruction may be executed at any moment after determining that the first touch control interrupt instruction is generated, which is not limited herein.

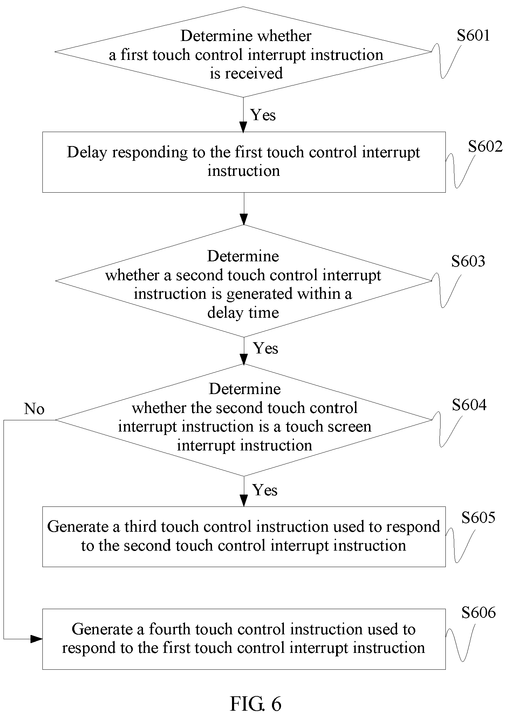

Another embodiment of the present invention further discloses a touch control responding method, and as shown in FIG. 6, the method includes the following steps:
S601: Determine whether a first touch control interrupt instruction is received.

If the first touch control interrupt instruction is received, S602 is performed to delay responding to the first touch control interrupt instruction.

S603: Determine whether a second touch control interrupt instruction is generated within a preset delay time.

If it is determined that the second touch control interrupt instruction is generated within the preset delay time, S604 is performed to determine whether the second touch control interrupt instruction is a touch screen interrupt instruction, if yes, S605 is performed to generate a third touch control instruction that responds to the second touch control interrupt instruction; and if not, S606 is performed to generate a fourth touch control instruction that responds to the first touch control interrupt instruction.

Specifically, in this embodiment, the first touch control interrupt instruction and the second touch control interrupt instruction both include a touch screen interrupt instruction and a touch control button interrupt instruction, and the first touch control interrupt instruction is different from the second touch control interrupt instruction.

The second touch control interrupt instruction also includes identification information of a touch control type, which is the same as that in the foregoing embodiment, and after the identification information of the touch control type is identified, it is learned that whether the second touch control interrupt instruction is a touch control button interrupt instruction or a touch screen interrupt instruction.

Similarly, the operation of identifying the identification information of the touch control type in the second touch control interrupt instruction may be executed at any moment after determining that the second touch control interrupt instruction is generated, which is not limited herein.

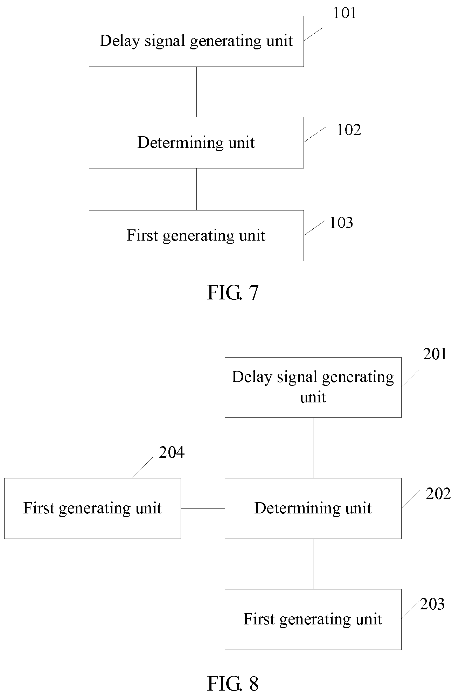

Another embodiment of the present invention further discloses a touch control responding apparatus, and referring to FIG. 7, the apparatus includes:
a delay signal generating unit 101, configured to: after receiving a first touch control interrupt instruction, delay responding to the first touch control interrupt instruction;
a determining unit 102, configured to determine whether a second touch control interrupt instruction is generated within a preset delay time; and
a first generating unit 103, configured to generate a first control instruction if the determining unit 102 determines that the second touch control interrupt instruction is generated within the preset delay time, where the first control instruction is used to respond to the first touch control interrupt instruction or the second touch control interrupt instruction, where the first touch control interrupt instruction and the second touch control interrupt instruction both include a touch screen interrupt instruction and a touch control button interrupt instruction, and the first touch control interrupt instruction is different from the second touch control interrupt instruction.

In the touch control responding apparatus disclosed in this embodiment of the present invention, after receiving a first touch control interrupt instruction, a delay signal generating unit 101 delays responding to the first touch control interrupt instruction, and a determining unit 102 determines whether a second touch control interrupt instruction is generated within a preset delay time; when the determining unit 102 determines that the second touch control interrupt instruction is generated, it indicates that a touch control operation is performed by a user in a middle area between a touch control button and a touch screen, and in this case, a first generating unit 103 generates a control instruction that responds only to the first touch control interrupt instruction or the second touch control interrupt instruction. In this way, when a touch control operation is performed by the user in the middle area between the touch control button and the touch screen, a control instruction responding to a touch control interrupt instruction is fixed, which resolves problems in the prior art: a touch control operation is randomly performed easily because of imbalance of a finger and further a misoperation is caused, and a conflict is caused because a touch screen operation and a touch button operation are concurrently performed.

Specifically, for a specific working process of each component in the touch control responding apparatus disclosed in this embodiment, reference may be made to the embodiments corresponding to FIG. 1, FIG. 2, and FIG. 3, and details are not described herein again.

Another embodiment of the present invention further discloses a touch control responding apparatus. Referring to FIG. 8, in addition to a delay signal generating unit 201, a determining unit 202, and a first generating unit 203, the touch control responding apparatus in this embodiment further includes: a second generating unit 204, configured to generate a second control instruction if the determining unit 202 determines that a second touch control interrupt instruction is not generated within a preset delay time, where the second control instruction is used to respond to the first touch control interrupt instruction.

A working process of the delay signal generating unit 201, the determining unit 202, and the first generating unit 203 in the touch control responding apparatus disclosed in this embodiment is the same as that of the delay signal generating unit 101, the determining unit 102, and the first generating unit 103 in the foregoing embodiment, reference may be made to content disclosed in the foregoing embodiment, and details are not described herein again.

Preferably, in another embodiment of the present invention, the first generating unit in the touch control responding apparatus includes:
a first signal generating unit, configured to generate a third control instruction according to a type of the first touch control interrupt instruction, where the third control instruction is used to respond to the first touch control interrupt instruction or the second touch control interrupt instruction; and
a second signal generating unit, configured to generate a fourth control instruction according to a type of the second touch control interrupt instruction, where the fourth control instruction is used to respond to the first touch control interrupt instruction or the second touch control interrupt instruction, where the type of the first touch control interrupt instruction and the type of the second touch control interrupt instruction separately include a touch screen interrupt instruction and a touch control button interrupt instruction.

Specifically, the first signal generating unit includes:
a first control signal generating unit, configured to: if it is determined that the first touch control interrupt instruction is the touch screen interrupt instruction, generate a first touch control instruction that responds to the first touch control interrupt instruction; and if it is determined that the first touch control interrupt instruction is not the touch screen interrupt instruction, generate a second touch control instruction that responds to the second touch control interrupt instruction.

The second signal generating unit includes:
a second control signal generating unit, configured to: if it is determined that the second touch control interrupt instruction is the touch screen interrupt instruction, generate a third touch control instruction that responds to the second touch control interrupt instruction; and if it is determined that the second touch control interrupt instruction is not the touch screen interrupt instruction, generate a fourth touch control instruction that responds to the first touch control interrupt instruction.

For working processes of the first control signal generating unit and the second control signal generating unit disclosed in this embodiment, reference may be made to the embodiments corresponding to FIG. 5 and FIG. 6, and details are not described herein again.

Another embodiment of the present invention further discloses a touch control terminal device, and it should be noted herein that the touch control terminal device disclosed in this embodiment of the present invention includes: a mobile phone, a tablet computer, and the like.

The touch control terminal device disclosed in this embodiment includes: a processor and a memory.

The memory is used to store a program, and the memory may include a high-speed RAM memory, and may further include a non-volatile memory (non-volatile memory), for example, at least one disk memory.

The processor is configured to execute the program stored in the memory; and the processor may be a central processing unit CPU, or an application-specific integrated circuit ASIC (Application Specific Integrated Circuit), or may be configured as one or more integrated circuits that implement the embodiments of the present invention.

The program stored in the memory includes: after a first touch control interrupt instruction is received, delaying responding to a first touch control interrupt instruction; and
a first generating unit, configured to determine whether a control signal is generated; and determine whether a second touch control interrupt instruction is generated within a preset delay time; and if the second touch control interrupt instruction is generated within the preset delay time, generate a first control instruction, where the first control instruction is used to respond to the first touch control interrupt instruction or the second touch control interrupt instruction, where the first touch control interrupt instruction and the second touch control interrupt instruction both include a touch screen interrupt instruction and a touch control button interrupt instruction, and the first touch control interrupt instruction is different from the second touch control interrupt instruction.

Preferably, in another embodiment of the present invention, the program stored in the memory of the touch control terminal device further includes: if it is determined that the second touch control interrupt instruction is not generated within the preset delay time, generating a second control instruction, where the second control instruction is used to respond to the first touch control interrupt instruction.

Preferably, in another embodiment of the present invention, the program that is of generating a first control instruction and is stored in the memory of the touch control terminal device specifically includes:
generating a third control instruction according to a type of the first touch control interrupt instruction, where the third control instruction is used to respond to the first touch control interrupt instruction or the second touch control interrupt instruction; and
generating a fourth control instruction according to a type of the second touch control interrupt instruction, where the fourth control instruction is used to respond to the first touch control interrupt instruction or the second touch control interrupt instruction, where
the type of the first touch control interrupt instruction and the type of the second touch control interrupt instruction separately include the touch screen interrupt instruction and the touch control button interrupt instruction.

Specifically, the generating the third control instruction according to a type of the first touch control interrupt instruction includes:
if it is determined that the first touch control interrupt instruction is the touch screen interrupt instruction, generating a first touch control instruction used to respond to the first touch control interrupt instruction; and
if it is determined that the first touch control interrupt instruction is not the touch screen interrupt instruction, generating a second touch control instruction used to respond to the second touch control interrupt instruction.

The generating the fourth touch control interrupt instruction according to a type of the second touch control interrupt instruction includes:
if it is determined that the second touch control interrupt instruction is the touch screen interrupt instruction, generating a third touch control instruction used to respond to the second touch control interrupt instruction; and
if it is determined that the second touch control interrupt instruction is not the touch screen interrupt instruction, generating a fourth touch control instruction used to respond to the first touch control interrupt instruction.

For a working process of the touch control terminal device disclosed in this embodiment, reference may be made to the embodiments of the touch control responding method, and details are not described herein again.

It should be noted herein that, after receiving a first touch control interrupt instruction, the touch control terminal device disclosed in this embodiment of the present invention first delays responding to the first touch control interrupt instruction, and determines whether a second touch control interrupt instruction is generated within a preset delay time; if the second touch control interrupt instruction is generated, it indicates that a touch control operation is performed by a user in a middle area between a touch control button and a touch screen, and in this case, a control instruction responding only to the first touch control interrupt instruction or the second touch control interrupt instruction is generated. In this way, when the touch control operation is performed by the user in the middle area between the touch control button and the touch screen, a control instruction responding to a touch control interrupt instruction is fixed, which resolves problems in the prior art: a touch control operation is randomly performed easily because of imbalance of a finger and further a misoperation is caused, and a conflict is caused because a touch screen operation and a touch button operation are concurrently performed.

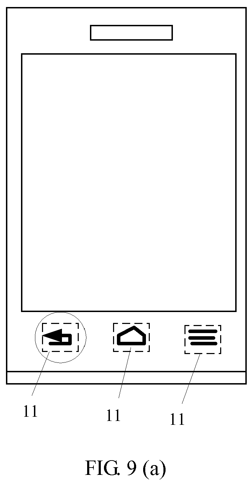

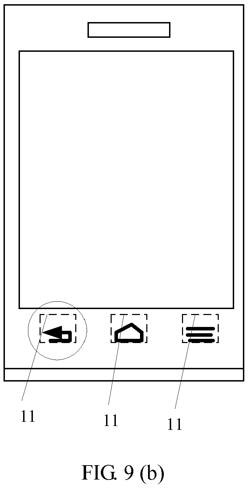

In addition, because a responding form corresponding to the touch control operation performed by the user in the middle area between the touch control button and the touch screen is fixed, a position of a sensor area 11 that senses a touch control operation performed in a touch control button area of the touch control terminal device may be shifted up, and reference may be made to FIG. 9(a) and FIG. 9(b).

Specifically, shifting up the position of the sensor area that senses the touch control operation performed in the touch control button area of the touch control terminal device refers to adjusting a position of the sensor area on a circuit board of the touch control terminal device, so that the sensor area is close to the touch screen of the touch control terminal device, and the sensor area is used to sense the touch control operation performed in the touch control button area of the touch control terminal device.

In a general case, a vertical distance between the sensor area corresponding to the touch control button of the touch control terminal device and the touch screen of the touch control terminal device is not greater than 4 mm, preferably, the distance may be 1.5 mm.

In this way, when a separation distance between an antenna of the touch control terminal device and the sensor area is increased, clearance of the antenna is increased, a bandwidth is widened, and performance of the antenna is enhanced.

It should further be noted herein that the position of the sensor area that senses the touch control operation performed in the touch control button area of the touch control terminal device is adjusted, however, in order not to affect an actual operation of a user, a position of a silkscreen area of the touch control button of the touch control terminal device does not need to be adjusted, in this case, the silkscreen area of the touch control button of the touch control terminal device does not completely correspond to the position of the sensor area corresponding to the silkscreen area, and a touch control operation is performed by the user only in the silkscreen area of the touch control button, which may possibly lead to that a sensor that senses the touch control operation performed in the touch control button of the touch control terminal device cannot detect a touch control operation of the user, reducing efficiency of the touch control operation.

In order to avoid occurrence of the foregoing phenomenon, sensitivity of the touch control button may generally be adjusted to improve the sensitivity. In this way, a detection range of the sensor that detects an operation of the user and is corresponding to the touch control button of the touch control terminal device may be widened, so that when a touch control operation is performed by the user in the silkscreen area of the touch control button, the sensor can also detect the touch control operation.

Specifically, after the touch control operation is performed by the user in the touch control button area of the touch control terminal device, capacitance of the touch control button area may change, and when a changed capacitance reaches a threshold, it is determined that the touch control operation is performed by the user, in this case, adjusting the sensitivity of the touch control button refers to reducing a corresponding threshold for determining whether the user activates the touch control button, and in this way, it may be ensured that the touch control operation performed by the user in the silkscreen area of the touch control button is detected.

In a general case, the detection range of the sensor of the touch control terminal device is a circle, and for details, reference may be made to a circle shown in FIG. 9(a) and FIG. 9(b), and after the sensitivity of the touch control button is adjusted, the detection range of the sensor of the touch control terminal device may be widened, that is, a diameter of the circle may be lengthened, specifically, the diameter is greater than 6 mm, and preferably, the diameter is 9 mm, however, the diameter may be generally not greater than 15 mm.

It should be noted herein that, setting, according to a size of the detection range of the sensor of the touch control terminal device, a value of a corresponding threshold for determining whether a user activates the touch control button is a well-known technology, a person skilled in the art should know how to set the corresponding threshold for determining whether the user activates the touch control button, so as to satisfy a requirement for the detection range of the sensor of the touch control terminal device.

The embodiments of the present specification are described in a progressive manner. The focus of each embodiment is placed on a difference from other embodiments. The same or similar parts of the embodiments can be referenced mutually.

The foregoing description of the disclosed embodiments enables a person skilled in the art to implement or use the present invention. Various modifications to the embodiments are obvious to the person skilled in the art, and general principles defined in this specification may be implemented in other embodiments without departing from the spirit or scope of the present invention. Therefore, the present invention will not be limited to the embodiments described in this specification but extends to the widest scope that complies with the principles and novelty disclosed in this specification.

## Claims

1. A touch control responding method, comprising:
after a first touch control interrupt instruction is received, delaying responding to the first touch control interrupt instruction;
determining whether a second touch control interrupt instruction is generated within a preset delay time; and
if the second touch control interrupt instruction is generated within the preset delay time, generating a first control instruction, wherein the first control instruction is used to respond to the first touch control interrupt instruction or the second touch control interrupt instruction, wherein
the first touch control interrupt instruction and the second touch control interrupt instruction both comprise a touch screen interrupt instruction and a touch control button interrupt instruction, and the first touch control interrupt instruction is different from the second touch control interrupt instruction.

2. The method according to claim 1, further comprising:
if it is determined that the second touch control interrupt instruction is not generated within the preset delay time, generating a second control instruction, wherein the second control instruction is used to respond to the first touch control interrupt instruction.

3. The method according to claim 1 or 2, wherein the generating a first control instruction comprises:
generating a third control instruction according to a type of the first touch control interrupt instruction, wherein the third control instruction is used to respond to the first touch control interrupt instruction or the second touch control interrupt instruction; and
generating a fourth control instruction according to a type of the second touch control interrupt instruction, wherein the fourth control instruction is used to respond to the first touch control interrupt instruction or the second touch control interrupt instruction, wherein
the type of the first touch control interrupt instruction and the type of the second touch control interrupt instruction separately comprise the touch screen interrupt instruction and the touch control button interrupt instruction.

4. The method according to claim 3, wherein the generating the third control instruction according to a type of the first touch control interrupt instruction comprises:
if it is determined that the first touch control interrupt instruction is the touch screen interrupt instruction, generating a first touch control instruction used to respond to the first touch control interrupt instruction; and
if it is determined that the first touch control interrupt instruction is not the touch screen interrupt instruction, generating a second touch control instruction used to respond to the second touch control interrupt instruction.

5. The method according to claim 3, wherein the generating the fourth control instruction according to a type of the second touch control interrupt instruction comprises:
if it is determined that the second touch control interrupt instruction is the touch screen interrupt instruction, generating a third touch control instruction used to respond to the second touch control interrupt instruction; and
if it is determined that the second touch control interrupt instruction is not the touch screen interrupt instruction, generating a fourth touch control instruction used to respond to the first touch control interrupt instruction.

6. A touch control responding apparatus, comprising:
a delay signal generating unit, configured to: after receiving a first touch control interrupt instruction, delay responding to the first touch control interrupt instruction;
a determining unit, configured to determine whether a second touch control interrupt instruction is generated within a preset delay time; and
a first generating unit, configured to generate a first control instruction if the determining unit determines that the second touch control interrupt instruction is generated within the preset delay time, wherein the first control instruction is used to respond to the first touch control interrupt instruction or the second touch control interrupt instruction, wherein the first touch control interrupt instruction and the second touch control interrupt instruction both comprise a touch screen interrupt instruction and a touch control button interrupt instruction, and the first touch control interrupt instruction is different from the second touch control interrupt instruction.

7. The apparatus according to claim 6, further comprising:
a second generating unit, configured to generate a second control instruction if the determining unit determines that the second touch control interrupt instruction is not generated within the preset delay time, wherein the second control instruction is used to respond to the first touch control interrupt instruction.

8. The apparatus according to claim 6 or 7, wherein the first generating unit comprises:
a first signal generating unit, configured to generate a third control instruction according to a type of the first touch control interrupt instruction, wherein the third control instruction is used to respond to the first touch control interrupt instruction or the second touch control interrupt instruction; and
a second signal generating unit, configured to generate a fourth control instruction according to a type of the second touch control interrupt instruction, wherein the fourth control instruction is used to respond to the first touch control interrupt instruction or the second touch control interrupt instruction, wherein
the type of the first touch control interrupt instruction and the type of the second touch control interrupt instruction separately comprise the touch screen interrupt instruction and the touch control button interrupt instruction.

9. The apparatus according to claim 8, wherein the first signal generating unit comprises:
a first control signal generating unit, configured to: if it is determined that the first touch control interrupt instruction is the touch screen interrupt instruction, generate a first touch control instruction that responds to the first touch control interrupt instruction; and if it is determined that the first touch control interrupt instruction is not the touch screen interrupt instruction, generate a second touch control instruction that responds to the second touch control interrupt instruction.

10. The apparatus according to claim 8, wherein the second signal generating unit comprises:
a second control signal generating unit, configured to: if it is determined that the second touch control interrupt instruction is the touch screen interrupt instruction, generate a third touch control instruction that responds to the second touch control interrupt instruction; and if it is determined that the second touch control interrupt instruction is not the touch screen interrupt instruction, generate a fourth touch control instruction that responds to the first touch control interrupt instruction.
